# FASCICULE DE BREVET EUROPEEN

(11) **EP 3 695 103 B1**
(45) Date de publication et mention de la délivrance du brevet: **29.09.2021**
(21) Numéro de dépôt: 18758943.7
(22) Date de dépôt: 01.08.2018
(51) Int. Cl.: F01K 25/10

(54) **DISPOSITIF ET PROCÉDÉ DE RÉFRIGÉRATION**
KÜHLVORRICHTUNG UND KÜHLVERFAHREN
REFRIGERATION DEVICE AND METHOD OF REFRIGERATION

(30) Priorité: 09.10.2017 FR 1701041
(43) Date de publication de la demande: 19.08.2020
(73) Titulaire: L'AIR LIQUIDE, Société Anonyme pour l'Etude et l'Exploitation des Procédés Georges Claude, 75007 Paris (FR)
(72) Inventeur: DURAND, Fabien, 38340 Voreppes (FR)
(74) Mandataire: Air Liquide
(86) Numéro de dépôt international: PCT/FR2018/051974
(87) Numéro de publication internationale: WO 2019/073129

(56) Documents cités:
- WO-A2-2009/066044
- JP-A- 2001 041 598
- JP-A- 2006 118 773

## Description

L'invention concerne un dispositif et procédé de réfrigération à basse température.

L'invention concerne plus particulièrement un dispositif de réfrigération à basse température comprise entre -100°C et -273°C comprenant un circuit de travail contenant un fluide de travail, le dispositif étant destiné à extraire de la chaleur à au moins un organe par échange de chaleur avec le fluide de travail circulant dans le circuit de travail, le circuit de travail comprenant en série: un mécanisme de compression du fluide de préférence isentropique ou sensiblement isentropique, un mécanisme de refroidissement du fluide de préférence isobare ou sensiblement isobare, un mécanisme de détente du fluide de préférence isentropique ou sensiblement isentropique et un mécanisme de réchauffement du fluide de préférence isobare ou sensiblement isobare, dans lequel le mécanisme de compression est du type à compression centrifuge et est constitué de deux étages de compression respectivement un premier étage de compression et second étage de compression disposés en série dans le circuit, le dispositif comprenant deux moteurs électriques d'entraînement respectifs des deux étages de compression, le mécanisme de détente étant constitué d'une turbine accouplée au moteur de l'un des étages de compression.

L'invention concerne en particulier les réfrigérateurs dits à cycle « Turbo Brayton » ou « refroidisseurs Turbo Brayton ».

L'invention concerne en particulier les réfrigérateurs cryogéniques, c'est-à-dire atteignant des températures inférieure ou égales à -100°C ou 173K par exemple notamment entre -100°C et -273°C).

Le document JP3928230B2 décrit un réfrigérateur de type Turbo-Brayton utilisant un moteur à haute vitesse une turbine et un compresseur situées respectivement aux deux extrémités de son arbre d'entraînement.

Pour améliorer le rendement énergétique d'un réfrigérateur une solution consiste à utiliser un ou des compresseurs centrifuges avec de bons rendements. Un compresseur centrifuge atteint un bon rendement si sa vitesse spécifique est égale ou proche de la valeur optimale. La valeur optimale ayant été déterminée expérimentalement par l'homme de l'art en rassemblant les mesures de rendement d'une multitude de compresseurs centrifuges ayant des vitesses spécifiques différentes. Celle-ci est typiquement de 0.75 lorsqu'elle est calculée avec le système d'unités définit ci-après.

Si cette vitesse spécifique est supérieure ou inférieure à la valeur optimale, le rendement est plus faible. La vitesse spécifique ws d'une compresseur centrifuge est définie par la formule comme suit : ws = w.Q^{0.5}/Δhs^{0.75}

Dans laquelle w est la vitesse de rotation du compresseur en radians par seconde, Q le débit volumique à l'entrée du compresseur en m³/s et Δhs l'augmentation d'enthalpie au travers de l'étage de compression (en J/kg) en considérant la compression comme étant isentropique.

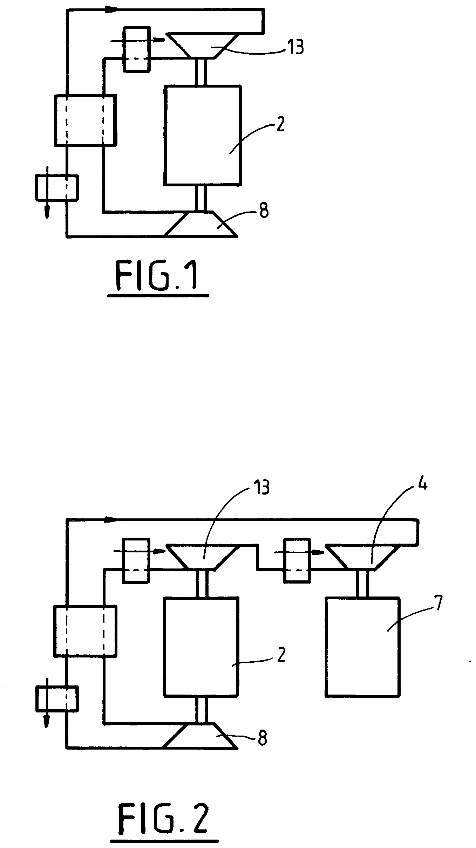

Un dispositif connu est illustré à la figure 1. Un unique moteur 2 entraîne un compresseur 13 et une turbine 8. Les inventeurs ont constaté que ce type de dispositif ne permet pas de faire fonctionner le compresseur à une bonne vitesse spécifique. En effet, le faible débit volumique inhérent à cette architecture entraine une vitesse spécifique faible par rapport à la valeur optimale.

Une autre solution connue illustrée à la figure 2 consiste à utiliser un deuxième moteur 7 avec à une de ses extrémité un compresseur centrifuge et à placer cette machine en amont du compresseur 13 déjà présent.

Etant donné qu'il existe une variation d'enthalpie Δhs globale optimale vis-à-vis du réfrigérateur, celle-ci n'est pas modifiée par rapport à l'état de l'art. Cette nouvelle architecture permet de répartir la variation d'enthalpie Δhs globale sur les deux étages de compression 4, 13 et par conséquent de diminuer la variation d'enthalpie Δhs d'un étage de compression et d'augmenter la vitesse spécifique des deux étages de compression 4, 13 et de se rapprocher ou d'atteindre la vitesse spécifique optimale.

Les inventeurs ont cependant constaté que, dans la pratique, cette amélioration profite seulement au premier étage de compression 4. En effet si le premier étage de compression 4 fonctionne à la vitesse spécifique optimale, le second étage de compression 13 va fonctionner à une vitesse spécifique typiquement deux fois inférieure à la vitesse spécifique optimale. Ceci a un impact sur le rendement de cet étage (typiquement moins dix points de rendement) et par conséquent a un impact fort sur le rendement global du réfrigérateur.

Ceci peut être démontré dans l'exemple chiffré suivant (où l'on considère que la puissance mécanique et la vitesse de rotation des deux moteurs 2, 7 sont identiques).

Dans cet exemple, la puissance mécanique P2 du second étage de compression 13 est égale à 150% de la puissance mécanique P1 du premier étage de compression 4 du fait de la présence de la turbine 8 qui aide le second moteur 2 typiquement à hauteur de 50% de la puissance du moteur. Etant donné que la puissance mécanique d'un compresseur centrifuge P est égale au produit du débit massique *ṁ* par l'augmentation d'enthalpie Δh (P=*ṁ*.Δh) et que le débit massique des deux étages de compression est identique, alors l'augmentation d'enthalpie du deuxième étage de compression Δh2 est égale à 150% de l'augmentation de l'enthalpie du premier étage de compression : Δh2 = 150% Δh1.

Δh étant l'augmentation d'enthalpie réelle (mesurée) au travers de l'étage de compression (en J/kg) (c'est-à-dire que la compression n'est pas forcément isentropique).

Si, de plus, on considère que les rendements des deux étages de compression sont identiques alors Δhs2 = 150% Δhs1.

Le débit volumique Q2 du deuxième étage de compression 13 est égal à 56% du débit volumique Q1 du premier étage de compression du fait que le taux de compression est typiquement de 1.8 au niveau du premier étage de compression 4 : Q2 = 56% Q1

La vitesse spécifique ws1 du premier étage de compression 4 est égale à w.Q1⁰⁵ / Δhs1 ^{0.75}

La vitesse spécifique ws2 du deuxième étage de compression 13 est donc égale à ws2 = w.Q2^{0.5}/Δhs2^{0.75} = w.(56%Q1)^{0.5}/(150% Δhs1)^{0.75} = 55%.w.Q1^{0.5}/Δhs1^{0.75} = 55%.ws1.

En admettant que la vitesse spécifique ws1 du premier étage de compression est égale à la vitesse spécifique optimale alors le deuxième étage fonctionne à 55% de la vitesse spécifique optimale.

Ceci ne permet pas d'optimiser le rendement du système. Le document JP2006118773A divulgue aussi un dispositif selon le préambule de la revendication 1.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que la turbine du mécanisme de détente est accouplée au moteur d'entraînement du premier étage de compression.

C'est-à-dire que le dispositif peut être un réfrigérateur à cycle de Brayton inverse utilisant un compresseur centrifuge à deux étages qui sont montés en série et deux moteurs de préférence électriques pour entrainer les compresseurs. L'étage basse pression (premier compresseur) et la turbine de détente sont montés sur le rotor d'un seul et même moteur (premier moteur) et dans lequel l'étage haute pression est monté sur le rotor du deuxième moteur.

Par ailleurs, des modes de réalisation de l'invention peuvent comporter l'une ou plusieurs des caractéristiques suivantes :
- le moteur électrique d'entraînement du premier étage de compression comprend un arbre de sortie dont l'une des extrémités porte et entraine en rotation par accouplement direct le premier étage de compression et dont l'autre extrémité porte et est entraîné en rotation par accouplement direct par la turbine,
- les deux moteurs sont identiques ou similaires,
- le mécanisme de refroidissement comprend un échangeur de refroidissement intermédiaire situé entre le premier étage de compression et le second étage de compression, pour refroidir le fluide sortant du premier étage de compression avant son entrée dans le second étage de compression,
- les moteurs sont des moteurs à grande vitesse c'est-à-dire des moteurs dont le produit de la puissance P en kW par la vitesse N en tours par minutes au carré (P.N²) est compris entre à 5.10¹⁰ et 5.10¹²
- la vitesse de rotation des deux moteurs est identique,
- la puissance mécanique des deux moteurs est identique,
- le moteur d'entraînement du deuxième étage de compression entraîne mécaniquement également un circulateur ou compresseur supplémentaire configuré pour faire circuler un fluide de refroidissement du moteur ou des moteurs,
- les deux étages de compression sont constitués chacun d'un compresseur centrifuge possédant une vitesse spécifique optimale déterminée maximisant le rendement énergétique du compresseur et en ce que le dispositif est configuré pour maintenir la vitesse spécifique des compresseurs comprise entre 70% et 130% et de préférence entre 80% et 120% de la vitesse spécifique optimale et encore plus préférentiellement entre 90% et 110% de la vitesse spécifique optimale,
- les deux étages de compression sont constitués de compresseur centrifuges possédant chacun une vitesse spécifique optimale déterminée maximisant le rendement énergétique du compresseur, chaque compresseur possédant un débit volumique déterminé et une puissance mécanique déterminée et en ce que le ratio entre le débit volumique du premier compresseur et le débit volumique du second compresseur est compris entre 1,1 et 2,5 et de préférence égale à 1,8 et en ce que rapport entre la puissance mécanique entraînant le premier compresseur et la puissance mécanique entraînant le second compresseur est compris entre 1,1 et 2,5 de préférence égal à 1,5 et en ce que le ratio des vitesses de rotation des deux moteurs est compris entre 0,5 et 1,5 et de préférence égal à un,
- le dispositif comprend un organe électronique de pilotage du dispositif et comprenant un organe de stockage et de traitement de données, l'organe électronique de pilotage étant configuré pour commander notamment l'un au moins des moteurs,
- le circuit de travail est de préférence fermé,
- les deux moteurs sont du type électrique,
- les moteurs possèdent les mêmes stators électromagnétiques et/ou les mêmes rotors électromagnétiques et/ou les mêmes paliers et/ou les mêmes systèmes de refroidissement,
- le mécanisme de refroidissement comprend au moins un échangeur de refroidissement situé entre le second étage de compression et la turbine, pour refroidir le fluide sortant du second étage de compression avant son entrée dans la turbine,
- l'un au moins des échangeurs de refroidissement est un échangeur à contre-courant échangeant thermiquement également avec le fluide de travail après sa sortie de la turbine et/ou après échange de chaleur avec l'organe à refroidir
- le moteur d'entraînement du second étage de compression comprend un arbre de sortie qui porte et entraine en rotation par accouplement direct le second étage de compression,
- la ou les turbines de détente sont du type à détente centripète,
- les arbres de sortie des moteurs sont montés sur des paliers de type magnétique ou de type dynamique a gaz, lesdits paliers étant utilisés pour sustenter les compresseurs et turbine respectivement,
- le mécanisme de réchauffement comprend un échangeur de chaleur commun dans lequel le fluide de travail transite a contre- courant selon qu'il est refroidit ou réchauffé,
- le circuit de travail comprend un réservoir formant une capacité tampon de stockage du fluide de travail,
- le fluide de travail est en phase gazeuse et constitue d'un gaz pur ou d'un mélange de gaz purs parmi: l'hélium, le néon, l'azote, l'oxygène, l'argon, le monoxyde de carbone, le méthane, ou tout autre fluide approprié,
- le fluide de travail est soumis dans le circuit à cycle de travail thermodynamique (température T, entropie S) du type Ericsson inverse.
- L'invention concerne également un procédé selon la revendication 13 de réfrigération d'une source froide utilisant un dispositif de réfrigération conforme à l'une quelconque des revendications 1 à 12, dans lequel un échange de chaleur est réalisé entre le fluide de travail refroidi après sa sortie du mécanisme de détente et l'organe à refroidir.

Selon d'autres particularités possibles :
- la vitesse spécifique des compresseurs est maintenue entre 70% et 130% et de préférence entre 80% et 120% et encore plus préférentiellement entre 90% et 110% de leurs vitesses spécifiques optimales.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un dispositif de réfrigération selon un premier exemple de réalisation de l'art antérieur,
- la figure 2 représente une vue schématique et partielle illustrant la structure et le fonctionnement d'un dispositif de réfrigération selon un deuxième exemple de réalisation de l'art antérieur,
- la figure 3 représente une vue schématique et partielle illustrant la structure et le fonctionnement d'un dispositif de réfrigération selon un exemple de réalisation possible de l'invention.

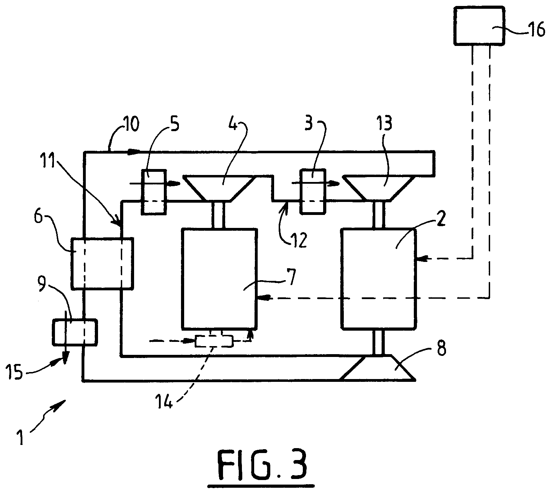

Le dispositif de réfrigération basse température (entre -100°C et -273°C et par exemple cryogénique) représenté à la figure 3 comprend un circuit 10 de travail fermé contenant un fluide de travail soumis à un cycle thermodynamique durant lequel le fluide atteint une température cryogénique. Le fluide de travail refroidi est mis en échange thermique avec un organe ou fluide 15 pour lui extraire de la chaleur (par exemple directement ou via un échangeur de chaleur 9).

Le circuit 10 de travail comprend, disposés en série : un mécanisme de compression 13, 4 (de préférence isentropique ou sensiblement isentropique du fluide), un mécanisme de refroidissement 3, 5, 6 du fluide (de préférence isobare ou sensiblement isobare), un mécanisme de détente 8 du fluide (de préférence isentropique ou sensiblement isentropique) et un mécanisme de réchauffement 9, 6 du fluide (de préférence isobare ou sensiblement isobare).

Le mécanisme de compression est du type à compression centrifuge.

Le mécanisme de compression est constitué de deux étages de compression 13, 4 (c'est-à-dire deux compresseurs) respectivement un premier étage de compression 13 et un second étage de compression 4 disposés en série dans le circuit 10. C'est-à-dire que le dispositif comprend, pour la compression, uniquement deux compresseurs, c'est-à-dire deux roues qui compriment le fluide de travail.

Le dispositif 1 comprend deux moteurs 2, 7 de préférence électriques d'entraînement respectifs des deux étages de compression 13, 4.

Le mécanisme de détente est constitué d'une turbine 8 (de préférence de type centripète) entraînant le moteur 2 (accouplée au moteur) du premier étage de compression 13. La turbine 8 du mécanisme de détente aide le moteur 2 à entrainer le premier étage de compression (c'est-à-dire le moteur 2 d'entraînement du premier compresseur 13 des deux compresseurs en série). C'est-à-dire que le compresseur utilise et comprend une seule turbine de détente.

Ainsi, le dispositif utilise deux moteurs 2, 7 et le deuxième moteur entraîne uniquement à une de ses extrémité un second compresseur 4 centrifuge. Ce second compresseur 4 est situé en aval du premier compresseur 13 (l'aval fait référence au sens de circulation du fluide de travail dans le circuit 10).

Cette nouvelle architecture permet de répartir l'augmentation d'enthalpie Δhs globale sur les deux étages de compression et permet par conséquent de diminuer l'augmentation d'enthalpie Δhs d'un étage et d'augmenter la vitesse spécifique des étages de compression pour se rapprocher de la vitesse spécifique optimale pour chaque compresseur.

L'augmentation globale d'enthalpie Δhs n'est pas modifiée par rapport à l'état de l'art de la figure 2.

Cette augmentation d'enthalpie Δhs globale est répartie entre les deux étages de compression 13, 4 ce qui permet ici aussi d'augmenter la vitesse spécifique des étages de compression et de se rapprocher ou d'atteindre la vitesse spécifique optimale.

Grâce à cette nouvelle architecture, les deux étages de compression 13, 4 peuvent fonctionner proche ou à la vitesse spécifique optimale (et pas seulement le premier étage comme c'était le cas pour l'art antérieur).

Ceci peut être illustré dans l'exemple chiffré suivant où l'on considère que la puissance mécanique et la vitesse de rotation w des deux moteurs 2, 7 sont identiques.

Dans cet exemple, la puissance mécanique P1 du premier étage de compression est égale à 150% de la puissance mécanique P2 du second étage de compression du fait de la présence de la turbine 8 qui aide le premier moteur 2 typiquement à hauteur de 50% de sa puissance.

Etant donné que la puissance mécanique P est égale au produit du débit massique *ṁ* par l'augmentation d'enthalpie Δh (P=*ṁ*.Δh), et que le débit massique des deux étages de compression est identique, alors, l'augmentation d'enthalpie Δh1 du premier étage de compression est égale à 150% de l'augmentation d'enthalpie du second étage de compression Δh2, c'est-à-dire que Δh1 = 150%Δh2 :
. Si, de plus, on considère que les rendements des deux étages de compression sont identiques alors Δhs1 = 150%Δhs2.

Le débit volumique Q1 du premier étage de compression 13 est égal à 180% du débit volumique Q2 du second étage de compression du fait que le taux de compression est typiquement de 1.8 au niveau du premier étage de compression. C'est-à-dire que : Q1 = 180% Q2

La vitesse spécifique ws1 du premier étage de compression est donnée par ws1= w.Q1^{0.5}/Δhs1^{0.75} = w.(180%Q2)^{0.5}/(150%Δhs2)^{0.75} =99%.w.Q2^{0.5}/Δhs2^{0.75} = 99%.ws2.

En admettant que la vitesse spécifique ws2 du second étage de compression est égale à la vitesse spécifique optimale alors le premier étage fonctionne à 99% de la vitesse spécifique optimale.

C'est-à-dire que les vitesses spécifiques ws1, ws2 des premier et second compresseur 13, 4 (qui identiques) sont égales à 99% à 100% de la vitesse spécifique optimale

Ainsi, l'architecture selon l'invention permet de faire fonctionner le dispositif de sorte que les deux étages de compression 13, 4 fonctionnent à la vitesse spécifique optimale.

Dans l'exemple donné ci-dessus les deux moteurs 2, 7 sont identiques, les vitesses w des deux moteurs 2, 7 sont identiques et les vitesses spécifiques ws des deux compresseurs 13, 4 sont identiques et optimales.

Bien entendu, les deux étages de compression 13, 4 peuvent être pilotés à des vitesses différentes pour fonctionner proche ou à la vitesse spécifique optimale également dans le cas où la puissance mécanique et/ou la vitesse de rotation des deux moteurs sont distinctes.

L'efficacité énergétique du dispositif de réfrigération est ainsi améliorée par rapport à l'art antérieur.

Le dispositif 1 de réfrigération illustré à la figure 3 est constitué principalement d'un premier étage de compression 13 (compresseur rotatif) dont le rotor est entrainé par le premier moteur 2 haute vitesse. On entend par moteur haute vitesse un moteur dont le produit de la puissance P en kW par la vitesse N en tours par minutes au carré (P.N²) est supérieur à 5.10¹⁰ (compris par exemple entre 5.10¹⁰ et 5.10¹² ). Ce premier moteur 2 à haute vitesse reçoit aussi à l'autre extrémité de son arbre rotatif le détendeur 8 (turbine de détente de préférence centripète) qui aide le moteur 2 à entrainer le premier étage de compression 13. Le dispositif comprend un deuxième étage de compression 4 dont le rotor est entrainé par le deuxième moteur 7 à haute vitesse.

Le premier étage de compression 13 comprime le fluide de travail (un gaz ou un mélange de gaz) à partir d'une basse pression (typiquement un gaz à une pression de 5 bars abs et une température de 15°C). Le premier étage 13 de compression transfère le gaz comprimé via une conduite 12 du circuit 10 (par exemple à une pression de 9 bars abs et une température de 77°C). Sur cette conduite 12 dite «à moyenne pression » peut être monté de préférence un échangeur 3 de refroidissement (« intercooler ») pour évacuer toute ou partie de la chaleur de compression (jusqu'à typiquement 15°C par exemple). L'échangeur 3 de refroidissement assure par exemple un échange thermique direct ou indirect avec un fluide caloporteur.

C'est-à-dire que, en aval de cet échangeur 3 de refroidissement, la compression du gaz de travail peut être qualifiée d'isotherme.

Le deuxième étage de compression 4 comprime ensuite le fluide de travail à partir de la moyenne pression (typiquement 9 bars abs et 15°C) et le transfère, via une conduite 11 (typiquement à une pression de 13.5 bars abs et une température de 56°C). Cette conduite 11 dite « à haute pression » comprend de préférence un échangeur de chaleur 5 (« intercooler ») pour évacuer toute ou partie de la chaleur de la seconde compression (refroidissement jusqu'à typiquement 15°C par exemple). L'échangeur 5 de refroidissement assure par exemple un échange thermique direct ou indirect avec un fluide caloporteur. C'est-à-dire que, en aval de cet échangeur 5 de refroidissement, la compression du gaz de travail peut être qualifiée d'isotherme.

Le fluide de travail est ensuite refroidi dans un échangeur 6 (par exemple jusqu'à typiquement -145°C). Cet échangeur 6 peut être un échangeur à contre-courant, assurant un échange thermique entre le gaz de travail relativement chaud en fin de compression et le gaz de travail relativement froid après détente et échange thermique avec l'organe 15 à refroidir.

Le fluide de travail est admis ensuite dans l'étage de détente (turbine 8) qui détend le fluide de travail à partir de la haute pression (typiquement 13.5 bars abs et une température de -145°C) jusqu'à une basse pression (typiquement 5 bars abs et une température de -175°C). Le fluide de travail détendu est transféré ensuite via une conduite dans un échangeur 9 de chaleur utilisé pour extraire de la chaleur au fluide, par exemple pour refroidir un objet ou fluide 15. Dans cet échangeur 9 le fluide remonte en température (par exemple jusqu'à typiquement -145°C).

Le fluide de travail peut être ensuite réchauffé dans l'échangeur 6 de chaleur à contre-courant évoqué ci-dessus (par exemple jusqu'à typiquement 15°C).

Les taux de compression des deux étages de compression 13, 4 peuvent être choisis de manière à ce que la vitesse spécifique ws des deux étages de compression soit la plus proche possible de la valeur optimale.

Les taux de compression des compresseurs 13, 4 peuvent préférentiellement être sélectionnés de manière à ce que les moteurs 2 et 7 soient identiques. C'est-à-dire que, par exemple le stator et/ou le rotor et/ou les paliers des moteurs sont identiques.

Ainsi par moteur identique ou similaire on désigne des moteurs strictement identiques ou différents mais ayant des caractéristiques techniques (travail fourni...) proches ou identiques, notamment leurs couples maximums sont égaux ou sensiblement égaux. Par exemple les mécanismes de production de travail des moteurs sont identiques ou ont des performances identiques ou proches à 130%.

Cette standardisation des moteurs 2, 7 présente également des avantages en terme de maintenance (nombre de pièces différentes réduit, coût de production réduit grâce à l'effet d'échelle).

Bien que de structure simple et peu coûteuse, l'invention permet d'améliorer l'efficacité des dispositifs de réfrigération.

## Revendications

1. Dispositif de réfrigération à basse température comprise entre -100°C et -273°C comprenant un circuit de travail (10) contenant un fluide de travail, le dispositif étant destiné à extraire de la chaleur à au moins un organe (15) par échange de chaleur avec le fluide de travail circulant dans le circuit (10) de travail, le circuit (10) de travail comprenant en série: un mécanisme de compression (13) du fluide de préférence isentropique ou sensiblement isentropique, un mécanisme de refroidissement du fluide de préférence isobare ou sensiblement isobare, un mécanisme de détente (8) du fluide de préférence isentropique ou sensiblement isentropique et un mécanisme de réchauffement (9, 6) du fluide de préférence isobare ou sensiblement isobare, dans lequel le mécanisme de compression (13, 4) est du type à compression centrifuge et est constitué de deux étages de compression (13, 4) respectivement un premier étage de compression (13) et second étage de compression (4) disposés en série dans le circuit (10), c'est-à-dire que le dispositif possède uniquement deux compresseurs (13, 4) constituant chacun un des deux étages de compression, le dispositif comprenant uniquement deux moteurs (2, 7) électriques d'entraînement respectifs des deux étages de compression (13, 4), le mécanisme de détente étant constitué d'une turbine (8) accouplée au moteur (2) de l'un des étages de compression (13, 4), c'est-à-dire que le dispositif possède une seule turbine (8) constituant le mécanisme de détente, **caractérisé en ce que** la turbine (8) du mécanisme de détente est accouplée au moteur (2) d'entraînement du premier étage de compression.

2. Dispositif selon la revendication 1, **caractérisé en ce que** le moteur électrique (2) d'entraînement du premier étage de compression (13) comprend un arbre de sortie dont l'une des extrémités porte et entraine en rotation par accouplement direct le premier étage de compression (13) et dont l'autre extrémité porte et est entraîné en rotation par accouplement direct par la turbine (8).

3. Dispositif selon la revendication 1 ou 2, **caractérisé en ce que** les deux moteurs (2, 7) sont identiques ou similaires.

4. Dispositif selon l'une quelconque des revendication 1 à 3, **caractérisé en ce que** le mécanisme de refroidissement comprend un échangeur (3) de refroidissement intermédiaire situé entre le premier étage de compression (13) et le second étage de compression (4), pour refroidir le fluide sortant du premier étage de compression (13) avant son entrée dans le second étage de compression (4).

5. Dispositif selon l'une quelconque des revendication 1 à 4, **caractérisé en ce que** les moteurs (2, 7) sont des moteurs à grande vitesse c'est-à-dire des moteurs dont le produit de la puissance P en kW par la vitesse N en tours par minutes au carré (P.N²) est compris entre à 5.10¹⁰ et 5.10¹²

6. Dispositif selon l'une quelconque des revendications 1 à 5, **caractérisé en ce que** la vitesse de rotation des deux moteurs (2, 7) est identique.

7. Dispositif selon l'une quelconque des revendications 1 à 6 **caractérisé en ce que** la puissance mécanique des deux moteurs (2, 7) est identique.

8. Dispositif selon l'une quelconque des revendication 1 à 7, **caractérisé en ce que** le moteur (7) d'entraînement du deuxième étage de compression (4) entraîne mécaniquement également un circulateur (14) ou compresseur supplémentaire configuré pour faire circuler un fluide de refroidissement du moteur ou des moteurs (2, 7).

9. Dispositif selon l'une quelconque des revendication 1 à 8, **caractérisé en ce que** les deux étages de compression (13, 4) sont constitués chacun d'un compresseur centrifuge possédant une vitesse spécifique optimale déterminée maximisant le rendement énergétique du compresseur et **en ce que** le dispositif est configuré pour maintenir la vitesse spécifique des compresseurs (13, 4) comprise entre 70% et 130% et de préférence entre 80% et 120% de la vitesse spécifique optimale et encore plus préférentiellement entre 90% et 110% de la vitesse spécifique optimale.

10. Dispositif selon l'une quelconque des revendication 1 à 9, **caractérisé en ce que** les deux étages de compression (13, 4) sont constitués de compresseur centrifuges possédant chacun une vitesse spécifique optimale déterminée maximisant le rendement énergétique du compresseur, chaque compresseur possédant un débit volumique déterminé (Q1, Q2) et une puissance mécanique déterminée (P1, P2) et **en ce que** le ratio (Q1/Q2) entre le débit volumique (Q1) du premier compresseur (13) et le débit volumique (Q2) du second compresseur (4) est compris entre 1,1 et 2,5 et de préférence égale à 1,8 et **en ce que** rapport (P1/P2) entre la puissance mécanique (P1) entraînant le premier compresseur (13) et la puissance mécanique (P2) entraînant le second compresseur (4) est compris entre 1,1 et 2,5 de préférence égal à 1,5 et **en ce que** le ratio (w1/w2) des vitesses de rotation des deux moteurs est compris entre 0,5 et 1,5 et de préférence égal à un.

11. Dispositif selon la revendication 10, **caractérisé en ce que** le produit: (w1/w2).(Q1/Q2)^{0.5}. (Δhs2/Δhs1)^{0.75} entre :
- le ratio (w1/w2) des vitesses de rotation des deux moteurs, le ratio (Q1/Q2) à la puissance 0,5 entre le débit volumique (Q1) du premier compresseur (13) et le débit volumique (Q2) du second compresseur (4),
- le rapport (Δhs2/Δhs1) à la puissance 0.75 entre l'augmentation d'enthalpie au travers de l'étage du second compresseur (4) en considérant la compression comme étant isentropique et l'augmentation d'enthalpie au travers de l'étage du premier compresseur (13) en considérant la compression comme étant isentropique, est compris entre 0,70 et 1,30 et de préférence compris entre 0,80 et 1,20 et encore plus préférentiellement compris entre 0,90 et 1,10.

12. Dispositif selon l'une quelconque des revendications 1 à 11, **caractérisé en ce qu'**il comprend un organe électronique (16) de pilotage du dispositif et comprenant un organe de stockage et de traitement de données, l'organe électronique (16) de pilotage étant configuré pour commander notamment l'un au moins des moteurs (13, 4).

13. Procédé de réfrigération d'une source (15) froide utilisant un dispositif (1) de réfrigération conforme à l'une quelconque des revendications 1 à 12, dans lequel un échange de chaleur est réalisé entre le fluide de travail refroidi après sa sortie du mécanisme de détente (8) et l'organe (15) à refroidir.

14. Procédé de réfrigération selon la revendication 13 **caractérisé en ce que** la vitesse spécifique des compresseurs (13, 4) est maintenue entre 70% et 130% et de préférence entre 80% et 120% et encore plus préférentiellement entre 90% et 110% de leurs vitesses spécifiques optimales.

## Patentansprüche

1. Vorrichtung zur Tieftemperaturkühlung zwischen -100°C und -273°C, die einen ein Arbeitsfluid enthaltenden Arbeitskreislauf (10) enthält, wobei die Vorrichtung dazu bestimmt ist, durch Wärmeaustausch mit dem im Arbeitskreislauf (10) zirkulierenden Arbeitsfluid Wärme von mindestens einem Organ (15) abzuziehen, wobei der Arbeitskreislauf (10) in Reihe enthält: einen Mechanismus (13) zur vorzugsweise isentropen oder im Wesentlichen isentropen Verdichtung des Fluids, einen Mechanismus zur vorzugsweise isobaren oder im Wesentlichen isobaren Kühlung des Fluids, einen Mechanismus (8) zur vorzugsweise isentropen oder im Wesentlichen isentropen Expansion des Fluids und einen Mechanismus (9, 6) zur vorzugsweise isobaren oder im Wesentlichen isobaren Erwärmung des Fluids, wobei der Verdichtungsmechanismus (13, 4) von der Art mit Zentrifugalverdichtung ist und aus zwei Verdichtungsstufen (13, 4) besteht, einer ersten Verdichtungsstufe (13) bzw. einer zweiten Verdichtungsstufe (4), die im Kreislauf (10) in Reihe geschaltet sind, d.h., dass die Vorrichtung nur zwei Verdichter (13, 4) besitzt, die je eine der zwei Verdichtungsstufen bilden, wobei die Vorrichtung nur zwei elektrische Antriebsmotoren (2, 7) der zwei Verdichtungsstufen (13, 4) enthält, wobei der Expansionsmechanismus aus einer Turbine (8) besteht, die an den Motor (2) einer der Verdichtungsstufen (13, 4) angekoppelt ist, d.h., dass die Vorrichtung eine einzige Turbine (8) besitzt, die den Expansionsmechanismus bildet, **dadurch gekennzeichnet, dass** die Turbine (8) des Expansionsmechanismus an den Antriebsmotor (2) der ersten Verdichtungsstufe angekoppelt ist.

2. Vorrichtung nach Anspruch 1, **dadurch gekennzeichnet, dass** der elektrische Antriebsmotor (2) der ersten Verdichtungsstufe (13) eine Abtriebswelle enthält, von der ein Ende die erste Verdichtungsstufe (13) trägt und sie durch direkte Ankopplung in Drehung versetzt, und das andere Ende die Turbine (8) trägt und durch direkte Ankopplung von ihr in Drehung versetzt wird.

3. Vorrichtung nach Anspruch 1 oder 2, **dadurch gekennzeichnet, dass** die zwei Motoren (2, 7) gleich oder ähnlich sind.

4. Vorrichtung nach einem der Ansprüche 1 bis 3, **dadurch gekennzeichnet, dass** der Kühlmechanismus einen Zwischenkühltauscher (3) enthält, der sich zwischen der ersten Verdichtungsstufe (13) und der zweiten Verdichtungsstufe (4) befindet, um das aus der ersten Verdichtungsstufe (13) austretende Fluid vor seinem Eintritt in die zweite Verdichtungsstufe (4) zu kühlen.

5. Vorrichtung nach einem der Ansprüche 1 bis 4, **dadurch gekennzeichnet, dass** die Motoren (2, 7) Motoren mit großer Geschwindigkeit sind, d.h. Motoren, deren Produkt aus Leistung P in kW und Geschwindigkeit N in Umdrehungen pro Minute zum Quadrat (P.N²) zwischen 5·10¹⁰ und 5·10¹² liegt.

6. Vorrichtung nach einem der Ansprüche 1 bis 5, **dadurch gekennzeichnet, dass** die Drehgeschwindigkeit der zwei Motoren (2, 7) gleich ist.

7. Vorrichtung nach einem der Ansprüche 1 bis 6, **dadurch gekennzeichnet, dass** die mechanische Leistung der zwei Motoren (2, 7) gleich ist.

8. Vorrichtung nach einem der Ansprüche 1 bis 7, **dadurch gekennzeichnet, dass** der Antriebsmotor (7) der zweiten Verdichtungsstufe (4) mechanisch ebenfalls einen Zirkulator (14) oder zusätzlichen Verdichter antreibt, der konfiguriert ist, ein Kühlfluid des Motors oder der Motoren (2, 7) zirkulieren zu lassen.

9. Vorrichtung nach einem der Ansprüche 1 bis 8, **dadurch gekennzeichnet, dass** die zwei Verdichtungsstufen (13, 4) je aus einem Zentrifugalverdichter bestehen, der eine bestimmte optimale spezifische Geschwindigkeit besitzt, die den energetischen Wirkungsgrad des Verdichters maximiert, und dass die Vorrichtung konfiguriert ist, die spezifische Geschwindigkeit der Verdichter (13, 4) zwischen 70% und 130% und vorzugsweise zwischen 80% und 120% der optimalen spezifischen Geschwindigkeit und noch bevorzugter zwischen 90% und 110% der optimalen spezifischen Geschwindigkeit zu halten.

10. Vorrichtung nach einem der Ansprüche 1 bis 9, **dadurch gekennzeichnet, dass** die zwei Verdichtungsstufen (13, 4) aus Zentrifugalverdichtern bestehen, die je eine bestimmte optimale spezifische Geschwindigkeit besitzen, die den energetischen Wirkungsgrad des Verdichters maximiert, wobei jeder Verdichter einen bestimmten Volumendurchsatz (Q1, Q2) und eine bestimmte mechanische Leistung (P1, P2) besitzt, und dass die Verhältniszahl (Q1/Q2) zwischen dem Volumendurchsatz (Q1) des ersten Verdichters (13) und dem Volumendurchsatz (Q2) des zweiten Verdichters (4) zwischen 1,1 und 2,5 liegt und vorzugsweise gleich 1,8 ist, und dass das Verhältnis (P1/P2) zwischen der mechanischen Leistung (P1), die den ersten Verdichter (13) antreibt, und der mechanischen Leistung (P2), die den zweiten Verdichter (4) antreibt, zwischen 1,1 und 2,5 liegt, vorzugsweise gleich 1,5 ist, und dass die Verhältniszahl (w1/w2) der Drehgeschwindigkeiten der zwei Motoren zwischen 0,5 und 1,5 liegt und vorzugsweise gleich eins ist.

11. Vorrichtung nach Anspruch 10, **dadurch gekennzeichnet, dass** das Produkt (w1/w2)·(Q1/Q2)^{0.5}·(Δhs2/Δhs1) ^{0.75} aus:
- der Verhältniszahl (w1/w2) der Drehgeschwindigkeiten der zwei Motoren, der Verhältniszahl (Q1/Q2) bei der Leistung 0,5 zwischen dem Volumendurchsatz (Q1) des ersten Verdichters (13) und dem Volumendurchsatz (Q2) des zweiten Verdichters (4),
- dem Verhältnis (Δhs2/Δhs1) bei der Leistung 0.75 zwischen der Enthalpieerhöhung durch die Stufe des zweiten Verdichters (4) unter Annahme der Verdichtung als isentrop und der Enthalpieerhöhung durch die Stufe des ersten Verdichters (13) unter Annahme der Verdichtung als isentrop,
zwischen 0,70 und 1,30 und vorzugsweise zwischen 0,80 und 1,20 und noch bevorzugter zwischen 0,90 und 1,10 liegt.

12. Vorrichtung nach einem der Ansprüche 1 bis 11, **dadurch gekennzeichnet, dass** sie ein elektronisches Organ (16) zum Steuern der Vorrichtung und ein Speicher- und Datenverarbeitungsorgan enthaltend enthält, wobei das elektronische Steuerorgan (16) konfiguriert ist, insbesondere mindestens einen der Motoren (13, 4) zu steuern.

13. Kühlverfahren einer kalten Quelle (15), das eine Kühlvorrichtung (1) nach einem der Ansprüche 1 bis 12 verwendet, wobei ein Wärmeaustausch zwischen dem gekühlten Arbeitsfluid nach seinem Austritt aus dem Expansionsmechanismus (8) und dem zu kühlenden Organ (15) durchgeführt wird.

14. Kühlverfahren nach Anspruch 13, **dadurch gekennzeichnet, dass** die spezifische Geschwindigkeit der Verdichter (13, 4) zwischen 70% und 130% und vorzugsweise zwischen 80% und 120% und noch bevorzugter zwischen 90% und 110% ihrer optimalen spezifischen Geschwindigkeiten gehalten wird.

## Claims

1. Device for low-temperature refrigeration between - 100°C and -273°C comprising a working circuit (10) containing a working fluid, the device being intended to extract heat from at least one component (15) by heat exchange with the working fluid circulating in the working circuit (10), the working circuit (10) comprising in series: a mechanism (13) for compression of the fluid, preferably isentropic or substantially isentropic, a mechanism for cooling the fluid, preferably isobaric or substantially isobaric, a mechanism (8) for expansion of the fluid, preferably isentropic or substantially isentropic and a mechanism (9, 6) for heating the fluid, preferably isobaric or substantially isobaric, in which the compression mechanism (13, 4) is of the type with centrifugal compression and consists of two compression stages (13, 4), a first compression stage (13) and a second compression stage (4) respectively, arranged in series in the circuit (10), that is, the device has only two compressors (13, 4) each constituting one of the two compression stages, the device comprising only two electric drive motors (2, 7) of the two compression stages (13, 4) respectively, the expansion mechanism consisting of a turbine (8) coupled to the motor (2) of one of the compression stages (13, 4), that is, the device has only one turbine (8) constituting the expansion mechanism, **characterized in that** the turbine (8) of the expansion mechanism is coupled to the drive motor (2) of the first compression stage.

2. Device according to Claim 1, **characterized in that** the electric drive motor (2) of the first compression stage (13) comprises an output shaft, one end of which carries the first compression stage (13) and causes it to rotate by direct coupling and the other end of which carries and is caused to rotate by the turbine (8) by direct coupling.

3. Device according to Claim 1 or 2, **characterized in that** the two motors (2, 7) are identical or similar.

4. Device according to any one of Claims 1 to 3, **characterized in that** the cooling mechanism comprises an intermediate cooling exchanger (3) located between the first compression stage (13) and the second compression stage (4), for cooling the fluid leaving the first compression stage (13) before it enters the second compression stage (4).

5. Device according to any one of Claims 1 to 4, **characterized in that** the motors (2, 7) are high-speed motors, i.e. motors for which the product of the power P in kW times the speed N in revolutions per minute squared (P.N²) is between 5.10¹⁰ and 5.10¹².

6. Device according to any one of Claims 1 to 5, **characterized in that** the rotary speed of the two motors (2, 7) is identical.

7. Device according to any one of Claims 1 to 6, **characterized in that** the mechanical power of the two motors (2, 7) is identical.

8. Device according to any one of Claims 1 to 7, **characterized in that** the drive motor (7) of the second compression stage (4) also mechanically drives a circulating pump (14) or additional compressor configured for circulating a cooling fluid of the motor or motors (2, 7) .

9. Device according to any one of Claims 1 to 8, **characterized in that** the two compression stages (13, 4) each consist of a centrifugal compressor possessing an optimum specific speed determined by maximizing the energy efficiency of the compressor and **in that** the device is configured to maintain the specific speed of the compressors (13, 4) between 70% and 130% and preferably between 80% and 120% of the optimum specific speed and even more preferably between 90% and 110% of the optimum specific speed.

10. Device according to any one of Claims 1 to 9, **characterized in that** the two compression stages (13, 4) consist of centrifugal compressors each possessing an optimum specific speed determined by maximizing the energy efficiency of the compressor, each compressor possessing a defined volume flow rate (Q1, Q2) and a defined mechanical power (P1, P2) and **in that** the ratio (Q1/Q2) of the volume flow rate (Q1) of the first compressor (13) to the volume flow rate (Q2) of the second compressor (4) is between 1.1 and 2.5 and preferably equal to 1.8 and **in that** the ratio (P1/P2) of the mechanical power (P1) driving the first compressor (13) to the mechanical power (P2) driving the second compressor (4) is between 1.1 and 2.5 and preferably equal to 1.5 and **in that** the ratio (w1/w2) of the rotary speeds of the two motors is between 0.5 and 1.5 and preferably equal to 1.

11. Device according to Claim 10, **characterized in that** the product: (w1/w2) . (Q1/Q2) ^{0.5}. (Δhs2/Δhs1) ^{0.75} between:
- the ratio (w1/w2) of the rotary speeds of the two motors, the ratio (Q1/Q2) at power of 0.5 of the volume flow rate (Q1) of the first compressor (13) to the volume flow rate (Q2) of the second compressor (4),
- the ratio (Δhs2/Δhs1) at power of 0.75 of the increase in enthalpy through the stage of the second compressor (4) assuming the compression to be isentropic, to the increase in enthalpy through the stage of the first compressor (13) assuming the compression to be isentropic, is between 0.70 and 1.30 and preferably between 0.80 and 1.20 and even more preferably between 0.90 and 1.10.

12. Device according to any one of Claims 1 to 11, **characterized in that** it comprises an electronic control unit (16) of the device and comprises a unit for data storage and processing, the electronic control unit (16) being configured notably for controlling at least one of the motors (13, 4).

13. Method of refrigeration of a cold source (15) using a refrigerating device (1) according to any one of Claims 1 to 12, in which heat exchange takes place between the working fluid cooled after it leaves the expansion mechanism (8) and the component (15) to be cooled.

14. Method of refrigeration according to Claim 13, **characterized in that** the specific speed of the compressors (13, 4) is maintained between 70% and 130% and preferably between 80% and 120% and even more preferably between 90% and 110% of their optimum specific speeds.
